# EUROPÄISCHE PATENTANMELDUNG

(11) **EP 1 415 857 A2**
(43) Veröffentlichungstag der Anmeldung: **06.05.2004**
(21) Anmeldenummer: 03022977.7
(22) Anmeldetag: 10.10.2003
(51) Int. Cl.: B60Q 5/00, B60Q 1/00

(54) **Fahrzeuglenkrad**

(30) Priorität: 30.10.2002 DE 20216793 U; 20.06.2003 DE 20309521 U
(71) Anmelder: TRW Automotive Safety Systems GmbH, 63743 Aschaffenburg (DE)
(72) Erfinder: Rumpf, Dieter, 63322 Rödermark (DE)
(74) Vertreter: Kitzhofer, Thomas, Dipl.-Ing.

(57) **Zusammenfassung**

Fahrzeuglenkrad, mit einem ersten Schalter (2) und einem ersten Betätigungselement (4) zum Betätigen des ersten Schalters, mit einem zweiten Schalter (132) und einem zweiten Betätigungselement (110) zum Betätigen des zweiten Schalters, mit einem Träger (134), der durch das zweite Betätigungselement (110) zum Betätigen des zweiten Schalters (132) in einer Betätigungsrichtung (B) verschiebbar ist und auf dem der erste Schalter (2) gelagert ist, und mit einem Grundkörper (122), relativ zu welchem der Träger (134) in Betätigungsrichtung (B) verschiebbar gelagert ist, wobei das erste Betätigungselement (4) mit einem Stoppelement (9) versehen ist, das am Grundkörper (122) anschlägt, wenn das erste Betätigungselement (110) bis zur vollständigen Betätigung des ersten Schalters (2) verschoben ist, und das eine zur Betätigung des zweiten Schalters (132) führende Verschiebung des Trägers (134) mittels des ersten Betätigungselements (4) verhindert.

## Beschreibung

Die Erfindung betrifft ein Fahrzeuglenkrad mit Schaltern und Betätigungselementen zum Betätigen der Schalter. Diese Schalter können beispielsweise ein Hupkontaktschalter und Multifunktionsschalter sein, zur Auslösung der Hupe bzw. zur Steuerung von Funktionen wie Bordcomputer, Radio etc. vom Lenkrad aus.

Für eine einfache Herstellung des Fahrzeuglenkrades sind die Schalter häufig auf einem gemeinsamen sich bewegenden Teil, vorzugsweise auf einem Träger in Form einer Leiterplatte, angebracht. Zum Beispiel auf einem sogenannten "Floating-horn" Gassackmodul, mit dem heutzutage die meisten Fahrzeuglenkräder ausgestattet sind. Dieses wird so bezeichnet, weil das gesamte Gassackmodul in der Achsrichtung des Lenkrades verschiebbar gelagert ist und zum Auslösen der Hupe durch Drücken der Abdeckung des Gassackmoduls verschoben werden kann, um den Hupenkontaktschalter zu betätigen. Da die Multifunktionsschalter ebenfalls am Gassackmodul angebracht sind, kann es passieren, daß bei festem Drücken eines Multifunktionsschalters unbeabsichtigt die Hupe ausgelöst wird.

Um diese ungewollte Fehlbetätigung zu vermeiden, sind bereits mehrere Lösungen vorgeschlagen worden. Eine Lösung besteht darin, die Multifunktionsschalter so anzuordnen, daß sie in einer anderen Richtung betätigt werden als die Hupe. Dies bedeutet jedoch eine Einschränkung des Bedienungskomforts und erfordert Kompromisse bei der designerischen Gestaltung des Gassackmoduls. Eine andere Lösung besteht in der Bewegungsentkopplung zwischen dem Multifunktionsschalter und der Hupe durch getrennte Träger für die beiden Schalter. Dies ist jedoch eine aufwendige Lösung, die zusätzliche Bauteile, Verdrahtung und Montagearbeiten erfordert. Eine weitere, elektronische Lösung kann durch eine logische Verknüpfung der Schalter erzielt werden, wobei im einfachsten Fall beim Betätigen der Multifunktionsschalter der Stromkreis der Hupe unterbrochen wird. Dies hat allerdings zur Folge, daß die Hupe nicht jederzeit zur Verfügung steht, was nicht akzeptabel ist.

Die Erfindung schafft eine einfache und zuverlässige Lösung des oben genannten Problems in Form eines Fahrzeuglenkrades, mit einem ersten Schalter und einem ersten Betätigungselement zum Betätigen des ersten Schalters, mit einem zweiten Schalter und einem zweiten Betätigungselement zum Betätigen des zweiten Schalters, mit einem Träger, der durch das zweite Betätigungselement zum Betätigen des zweiten Schalters in einer Betätigungsrichtung verschiebbar ist und auf dem der erste Schalter gelagert ist, und mit einem Grundkörper, relativ zu welchem der Träger in Betätigungsrichtung verschiebbar gelagert ist, wobei das erste Betätigungselement mit einem Stoppelement versehen ist, das am Grundkörper anschlägt, wenn das erste Betätigungselement bis zur vollständigen Betätigung des ersten Schalters verschoben ist, und das eine zur Betätigung des zweiten Schalters führende Verschiebung des Trägers mittels des ersten Betätigungselements verhindert. Das Stoppelement sorgt dafür, daß ein sogenanntes "Überdrücken" des ersten Betätigungselements, also beispielsweise einer Taste für einen Multifunktionsschalter, nicht mehr möglich ist. Wird dagegen bei gedrücktem Multifunktionstaster das zweite Betätigungselement, also beispielsweise die Taste zur Auslösung der Hupe, betätigt, kann sich der gemeinsame Träger bewegen, um den Hupkontaktschalter zu betätigen, während die Multifunktionstaste durch das Stoppelement an einer weiteren Bewegung gehindert bleibt. Dadurch ist die ungewollte Betätigung des zweiten Schalters bei einer Betätigung des ersten Schalters ausgeschlossen.

Gemäß einer vorteilhaften Ausführungsform weist der Träger eine Oberseite und eine Unterseite auf, wobei der erste Schalter an der Oberseite und der zweite Schalter an der Unterseite angebracht ist. Dies führt zu einer besonders kompakten platzsparenden Bauweise, bei der beide Schalter gemeinsam auf einem Träger sitzen. Die beiden Schalter können direkt übereinander angeordnet sein, was eine vereinfachte und kurze Leitungsführung ermöglicht.

Gemäß einer bevorzugten Ausführungsform ist das zweite Betätigungselement ein im Fahrzeuglenkrad verschiebbar gelagertes Gassackmodul (Floating-hom-Gassackmodul) und der zweite Schalter ein Hupkontaktschalter. Damit kann die gesamte Oberfläche des Gassackmoduls als Betätigungsfläche zum Auslösen der Hupe benutzt werden. Somit ist eine schnelle Betätigung der Hupe in einem Gefahrfall möglich.

Gemäß einer weiteren vorteilhaften Ausführungsform ist das erste Betätigungselement an einem seitlichen Ausläufer des Gassackmoduls verschiebbar gelagert. Auf diese Weise bilden das erste und das zweite Betätigungselement eine gemeinsame Montageeinheit,. die vorgefertigt sein kann und einfach in das Fahrzeuglenkrad einzubauen ist.

Weitere vorteilhafte Ausführungsformen ergeben sich aus den Unteransprüchen.

Die Erfindung wird nachfolgend anhand einer bevorzugten Ausführungsform ausführlich beschrieben. Dabei wird Bezug genommen auf die Zeichnungen, in denen zeigt:
- Figur 1 die rechte Hälfte eines erfindungsgemäßen Lenkrads im Querschnitt, wobei weder Hupe noch Multifunktionsschaltereinheit gedrückt sind,
- Figur 2 das Lenkrad nach Figur 1 bei betätigter Hupe, und
- Figur 3 das Lenkrad nach Figur 1 bei gedrückter Multifunktionsschaltereinheit.

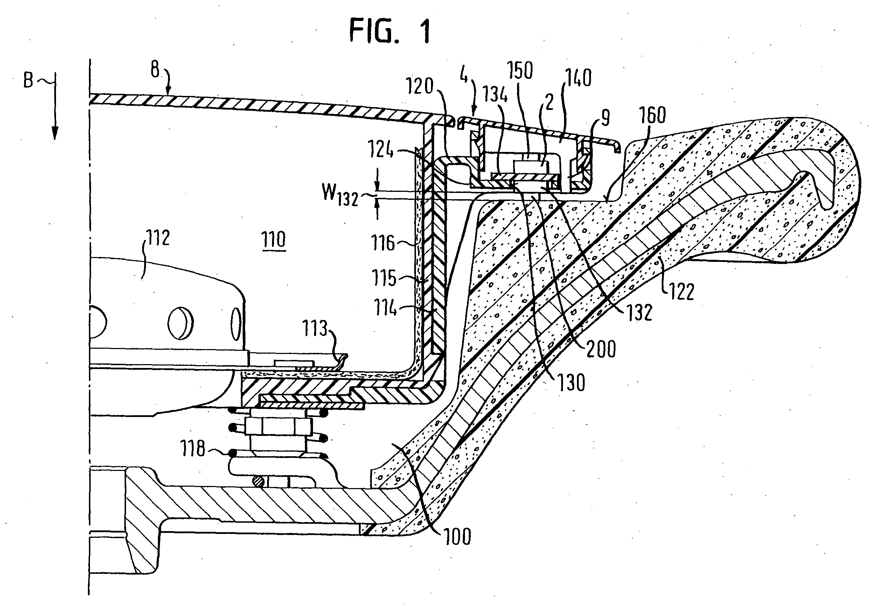

In Figur 1 ist ein Fahrzeuglenkrad mit einem umschäumten Lenkradskelett 122 und einem Floating-hom-Gassackmodul 110 dargestellt. Das Lenkradskelett 122 bildet einen Grundkörper und ist mit einer topfförmigen Ausnehmung 100 ausgestattet, in welcher das Gassackmodul 110 in der in Figur 1 durch den Pfeil B angedeuteten Richtung parallel zur Längsachse des Lenkrades verschiebbar gelagert ist.

Das Gassackmodul 110 weist ein wannenförmiges, nach oben offenes Modulgehäuse 114 auf, in dem ein Behälter 115 sitzt. Die zum Fahrzeuginsassen weisende Oberfläche des Behälters 115 bildet eine Abdeckung 8, die aufreißbar ist um einen im Innern des Behälters untergebrachten Gassack (in den Figuren durch 116 angedeutet) austreten zu lassen. Außerdem ist im Inneren des Behälters 115 ein Gasgenerator 112 untergebracht, der mit seinem Generatorflansch 113 am Modulgehäuse 114 befestigt ist, wobei zwischen dem Generatorflansch 113 und dem Modulgehäuse 114 auch der Behälter 115 und der Gassack 116 befestigt sind.

An einem oberen Rand 120 des Modulgehäuses 114 ist im Bereich der Speichen des Lenkrades, vorzugsweise links und rechts symmetrisch, jeweils ein radialer Ausläufer 124 ausgebildet, an dem ein Träger 134 für einen ersten Schalter 2 und einen zweiten Schalter 132 befestigt ist. Die Schalter 2, 132 sind jeweils mit einem Druckstößel 150 bzw. 200 versehen, der zur Betätigung des Schalters gedrückt werden kann.

Der Träger 134 weist vorzugsweise eine Leiterplatte auf, auf deren Oberseite der erste Schalter 2 mit nach oben weisendem Druckstößel 150, und auf deren Unterseite der zweite Schalter 132 mit nach unten weisendem Druckstößel 200, angebracht ist. Der zweite Schalter 132 ragt durch eine Öffnung im Ausläufer 124, so daß der Druckstößel 200 an einer in der Umschäumung des Lenkradskeletts 122 ausgebildeten ebenen Anschlagfläche 160 anliegen kann, die sich unter dem Ausläufer 124 im wesentlichen senkrecht zur Längsachse des Fahrzeuglenkrades erstreckt.

Am Ausläufer 124 ist ebenfalls ein erstes Betätigungselement in Form einer Drucktaste 4 in Betätigungsrichtung B verschiebbar gelagert. Die Taste 4 besitzt an ihrer zur Leiterplatte 134 gewandten Unterseite wenigstens eine Rippe 140, mit der sie bei einer Verschiebung über den Druckstößel 150 den Schalter 2 betätigen kann.

Der Schalter 2 dient zur Auslösung eines sogenannten Multifunktionsmerkmales beispielsweise für die Bedienung von Bordcomputer, Radio, Navigationssystem oder ähnlichem, so daß die Taste 4 und der Schalter 2 zusammen Teil einer Multifunktionsschaltereinheit sind, von der im Schnitt der Figur 1 nur eine Taste/Schalter-Kombination dargestellt ist. Die Multifunktionsschaltereinheit kann jedoch mehrere solcher Taste/Schalter-Kombinationen aufweisen, die hintereinander angeordnet sein können. Erfindungsgemäß besitzt wenigstens die Rippe 140 einer Taste 4 ein Stoppelement in Form eines nach unten hervorstehenden Fortsatzes 9, der durch eine Öffnung im Ausläufer 124 greift.

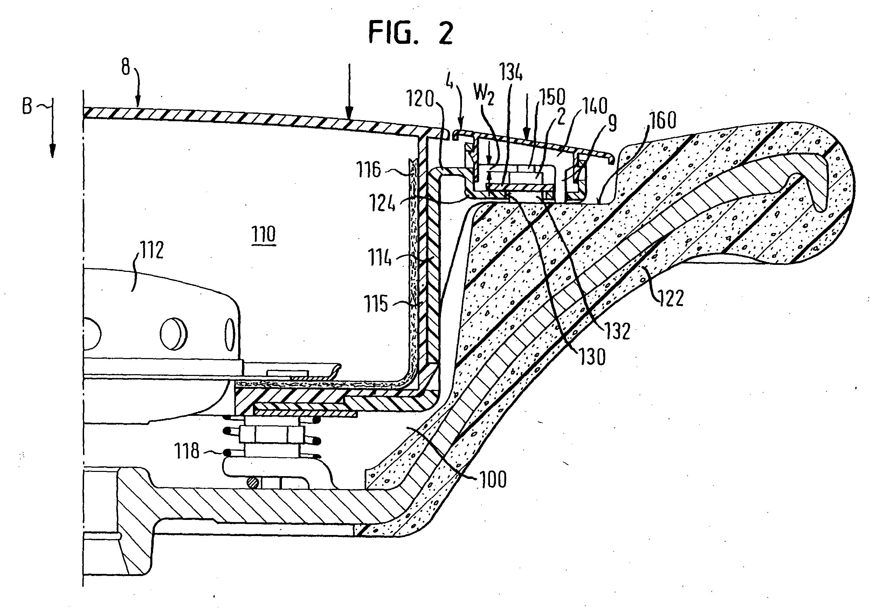

Der Schalter 132 dient als Hupkontaktschalter zur Auslösung der Hupe. Zu seiner Betätigung muß eine Kraft auf die Abdeckung 8 ausgeübt werden, und zwar in der Betätigungsrichtung B. Dadurch wird das verschiebbar gelagerte Modulgehäuse 114 aus seiner Ruhestellung, wie sie in Figur 1 dargestellt ist, in die Betätigungsstellung, die in Figur 2 dargestellt ist, verschoben, wobei selbstverständlich auch der Träger 134 in der Betätigungsrichtung mitgenommen wird. Dabei wird der Hupkontaktschalter 132 über den Druckstößel 200 von der Anschlagfläche 160 betätigt. Um einen möglichst kurzen Betätigungsweg zu erreichen, liegt der Druckstößel 200 vorzugsweise bereits in der Ruhestellung an der Anschlagfläche 160 an, wie es in Figur 1 dargestellt ist.

Nach dem Loslassen der Abdeckung 8 kehrt das Modulgehäuse 114 infolge einer von Rückstellfedern 118 ausgeübten Rückstellkraft wieder in die Ruhelage zurück.

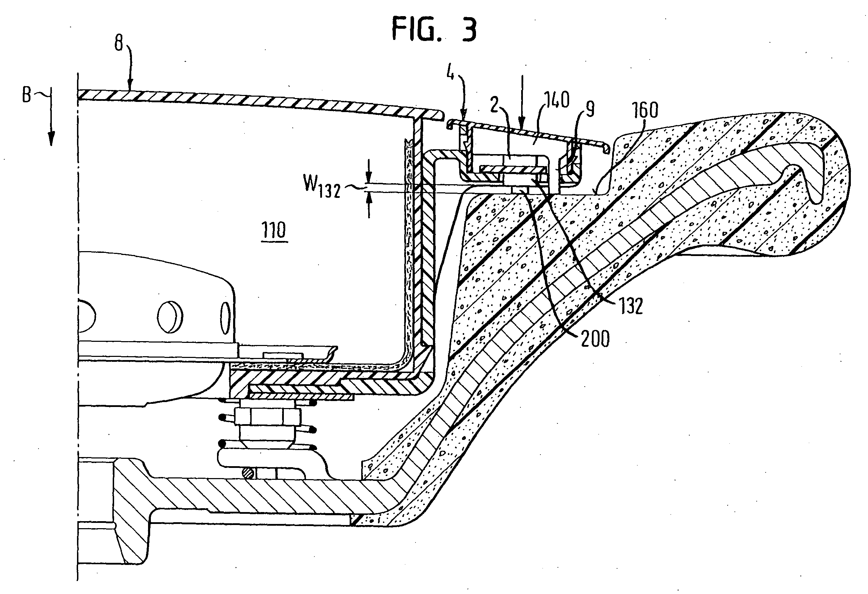

Wird, wie in Figur 3 dargestellt, die Taste 4 zur Auslösung eines Multifunktionsmerkmals in der Betätigungsrichtung B nach unten gedrückt, so wird der zugehörige Schalter 2 von der Rippe 140 durch den Druckstößel 150 betätigt. Nachdem der Betätigungsweg W₂ (siehe Fig. 2) des Schalters 2, der in der dargestellten Ausführungsform beispielsweise 1,5 mm beträgt, zurückgelegt ist, kommt der Fortsatz 9 an der Anschlagfläche 160 in Anschlag. Die Taste 4 kann daher nicht weiter nach unten gedrückt werden. Damit ist aber zuverlässig verhindert, daß bei weiterem Drücken der Taste 4 das Modulgehäuse 114 verschoben wird und damit der Hupkontaktschalter 132 durch "Überdrücken" der Taste 4 versehentlich betätigt würde.

Der Betätigungsweg W₁₃₂ des Hupkontaktschalters 132 entspricht vorzugsweise dem Betätigungsweg W₂ des Schalters 2 der Multifunktionsschaltereinheit, damit der Träger 134 bei Betätigung des Schalters 2 in keinem Fall in Bewegung versetzt wird.

Natürlich ist auch der Schalter 2 mit einer Rückstellfeder ausgestattet. Die Kraft dieser Rückstellfeder ist jedoch wesentlich geringer als die der Rückstellfeder 118, so daß beim Drücken der Taste 4 zuerst die Rückstellfeder im Schalter 2 zusammengedrückt wird.

Tritt der Fall ein, daß die Hupe durch Drücken der Abdeckung 8 ausgelöst werden soll, während gleichzeitig die Taste 4 gedrückt ist, kann es dazu kommen, daß durch die Abwärtsbewegung des Modulgehäuses 114 und die damit verbundene Verschiebung des Trägers 134 die Betätigung des Schalters 2 aufgehoben wird, da die Taste 4 durch den Anschlag des Fortsatzes 9 an der Anschlagfläche 160 daran gehindert wird, der Abwärtsbewegung des Trägers 134 zu folgen. Dies kann aber durchaus wünschenswert sein, da vom Fahrer keine Betätigung der Multifunktionsschaltereinheiten vorgenommen werden soll, wenn ganz offensichtlich eine gefährliche Verkehrssituation vorliegt, die ihn zum Hupen veranlaßt hat.

Die Schalter 2, 132 sind in der beschriebenen Ausführungsform als Mikroschalter dargestellt, die beispielsweise als Öffner, Schließer oder Kombinationen daraus ausgeführt sein können. Es sind jedoch auch andere Ausführungsform denkbar, in denen die Schalter 2 beispielsweise durch Reed Kontakte oder einfache Kontaktpaare repräsentiert sind, von denen jeweils ein Kontakt an der Leiterplatte 134, der andere am Betätigungselement oder an einem durch dieses verschiebbaren Zwischenelement angebracht sein kann.

Das erste Betätigungselement 4 ist in der beschriebenen Ausführungsform am Ausläufer 124 des Modulgehäuses 114 gelagert und damit relativ zum Träger 134 verschiebbar. Alternativ könnte das erste Betätigungselement auch direkt am Träger oder aber am Grundkörper gelagert sein.

Die Erfindung schafft also eine Kombination von Multifunktionsschaltereinheit und Floating-horn-Gassackmodul, die keine separaten Schalterträger zur Bewegungsentkopplung benötigt und dennoch die Möglichkeit eines ungewollten Hupens beim Betätigen von Multifunktionsschaltern ausschließt.

## Patentansprüche

1. Fahrzeuglenkrad, mit einem ersten Schalter (2) und einem ersten Betätigungselement (4) zum Betätigen des ersten Schalters, mit einem zweiten Schalter (132) und einem zweiten Betätigungselement (110) zum Betätigen des zweiten Schalters, mit einem Träger (134), der durch das zweite Betätigungselement (110) zum Betätigen des zweiten Schalters (132) in einer Betätigungsrichtung (B) verschiebbar ist und auf dem der erste Schalter (2) gelagert ist, und mit einem Grundkörper (122), relativ zu welchem der Träger (134) in Betätigungsrichtung (B) verschiebbar gelagert ist, wobei das erste Betätigungselement (4) mit einem Stoppelement (9) versehen ist, das am Grundkörper (122) anschlägt, wenn das erste Betätigungselement (110) bis zur vollständigen Betätigung des ersten Schalters (2) verschoben ist, und das eine zur Betätigung des zweiten Schalters (132) führende Verschiebung des Trägers (134) mittels des ersten Betätigungselements (4) verhindert.

2. Fahrzeuglenkrad nach Anspruch 1, **dadurch gekennzeichnet, daß** die Betätigungselemente (4, 110) in dem Grundkörper (122) gelagert sind.

3. Fahrzeuglenkrad nach Anspruch 1 oder 2, **dadurch gekennzeichnet, daß** das erste Betätigungselement (4) relativ zu dem Träger (134) verschiebbar gelagert ist.

4. Fahrzeuglenkrad nach einem der vorhergehenden Ansprüche, **dadurch gekennzeichnet, daß** der Träger eine Leiterplatte (134) aufweist.

5. Fahrzeuglenkrad nach einem der vorhergehenden Ansprüche, **dadurch gekennzeichnet, daß** der Träger (134) eine Oberseite und eine Unterseite aufweist und der erste Schalter (2) an der Oberseite und der zweite Schalter an der Unterseite (132) angebracht ist.

6. Fahrzeuglenkrad nach einem der vorhergehenden Ansprüche, **dadurch gekennzeichnet, daß** der Grundkörper (122) von einem Lenkradskelett mit einer Umschäumung gebildet ist, und daß das Stoppelement (9) bei Verschiebung des ersten Betätigungselements (4) an einer Anschlagfläche (160) der Umschäumung in Anschlag kommt.

7. Fahrzeuglenkrad nach einem der vorhergehenden Ansprüche, **dadurch gekennzeichnet, daß** das erste Betätigungselement eine Taste (4) für einen Multifunktionsschalter (2) ist.

8. Fahrzeuglenkrad nach einem der vorhergehenden Ansprüche, **dadurch gekennzeichnet, daß** der zweite Schalter ein Hupkontaktschalter (132) ist.

9. Fahrzeuglenkrad nach einem der vorhergehenden Ansprüche, **dadurch gekennzeichnet, daß** das Stoppelement ein an dem ersten Betätigungselement ausgebildeter Fortsatz (9) ist.

10. Fahrzeuglenkrad nach einem der vorhergehenden Ansprüche, **dadurch gekennzeichnet, daß** das zweite Betätigungselement ein im Fahrzeuglenkrad verschiebbar gelagertes Gassackmodul (Floating-horn-Gassackmodul) (110) ist.

11. Fahrzeuglenkrad nach einem der vorhergehenden Ansprüche, **dadurch gekennzeichnet, daß** der Träger (134) an einem seitlichen Ausläufer (124) des Gassackmoduls (110) befestigt ist.

12. Fahrzeuglenkrad nach Anspruch 10 oder 11, **dadurch gekennzeichnet, daß** das erste Betätigungselement (4) an einem seitlichen Ausläufer (124) des Gassackmoduls relativ zum Träger (134) verschiebbar gelagert ist.
